# EUROPÄISCHE PATENTSCHRIFT

(11) **EP 0 817 961 B1**
(45) Veröffentlichungstag und Bekanntmachung des Hinweises auf die Patenterteilung: **08.01.2003**
(21) Anmeldenummer: 96945713.4
(22) Anmeldetag: 31.10.1996
(51) Int. Cl.: G01N 27/416, G01N 27/407

(54) **DICHTUNGSANORDNUNG FÜR GASSENSOR**
SEALING DEVICE FOR GAS SENSOR
DISPOSITIF D'ETANCHEITE POUR DETECTEUR DE GAZ

(30) Priorität: 31.01.1996 DE 19603379
(43) Veröffentlichungstag der Anmeldung: 14.01.1998
(73) Patentinhaber: ROBERT BOSCH GMBH, 70442 Stuttgart (DE)
(72) Erfinder: WEYL, Helmut, D-71701 Schwieberdingen (DE); JAUERNIG, Udo, D-71229 Leonberg (DE)
(86) Internationale Anmeldenummer: DE9602136
(87) Internationale Veröffentlichungsnummer: WO97028442

(56) Entgegenhaltungen:
- EP-A- 0 398 579
- DE-A- 3 206 903
- DE-A- 4 126 378
- US-A- 5 302 274
- US-A- 5 467 636
- PATENT ABSTRACTS OF JAPAN vol. 006, no. 166 (P-138), 31.August 1982 & JP 57 082762 A (NGK SPARK PLUG CO LTD), 24.Mai 1982,
- PATENT ABSTRACTS OF JAPAN vol. 013, no. 073 (P-830), 20.Februar 1989 & JP 63 259453 A (NGK SPARK PLUG CO LTD), 26.Oktober 1988,

## Beschreibung

Die Erfindung betrifft einen Gassensor, insbesondere für Abgase von Brennkraftmaschinen, mit den im Oberbegriff des Anspruchs 1 genannten Merkmalen.

### Stand der Technik

Gassensoren der gattungsgemäßen Art sind bekannt. So ist beispielsweise aus der DE 32 06 903 A1 ein Gassensor bekannt, bei dem ein planares Sensorelement in einer Längsbohrung eines Gehäuses mit zwei übereinander angeordneten, elektrisch isolierenden Formteilen fixiert ist. Zwischen den Formteilen ist das Sensorelement von einem bei der Montage verpreßten, elektrisch isolierenden Pulver umgeben, welches mittels eines Federelementes zusammengepreßt gehalten wird. Das Pulver bildet innerhalb des Gehäuses eine Dichtung für das Sensorelement, wobei die Dichtung einen Meßgasraum und einen Referenzgasraum für das Sensorelement voneinander trennt. Bekannt ist, als Dichtpulver Steatit einzusetzen. Hierbei ist nachteilig, daß einerseits das Steatitpulver eine Restporösität aufweist, die Undichtigkeiten zwischen dem Meßgasraum und dem Referenzgasraum hervorrufen kann. Darüber hinaus ist nachteilig, daß das Steatitpulver einen niedrigeren thermischen Ausdehnungskoeffizienten als das umgebende Gehäuse aufweist, so daß bei einer betriebsbedingten Erwärmung des Gassensors es ebenfalls zu Undichtigkeiten kommen kann.

### Vorteile der Erfindung

Der erfindungsgemäße Gassensor mit den im Anspruch 1 genannten Merkmalen bietet demgegenüber den Vorteil, daß eine Abdichtung zwischen dem Meßgasraum und dem Referenzgasraum auch bei extremen mechanischen und/oder thermischen Belastungen des Gassensors sicher aufrechterhalten werden kann. Dadurch, daß wenigstens eines der Formteile der Dichtungsanordnung eine Aufnahme für das Dichtmaterial ausbildet und das Dichtmaterial in dieser Aufnahme von dem weiteren Formteil mittels eines Federelementes verdichtet und/oder plastisch verformt wird und das Dichtmaterial in der verdichteten und/oder plastisch verformten Stellung gehalten wird, ist es vorteilhaft möglich, mittels der Formteile eine so große Druckkraft auf das Dichtmaterial auszuüben, daß dieses sich so weit verdichtet, daß eine Verbindung zwischen dem Meßgasraum und dem Referenzgasraum sowohl durch das Dichtmaterial selbst als auch an den Berührungsflächen zwischen dem Dichtmaterial und dem Sensorelement sicher ausgeschlossen werden kann.

Insbesondere ist vorteilhaft, wenn die das Dichtmaterial aufnehmenden Formteile einen niedrigeren thermischen Ausdehnungskoeffizienten als das Dichtmaterial aufweisen. Hierdurch wird es vorteilhaft möglich, daß bei einer betriebsbedingten Erwärmung des Sensorelementes und damit des Dichtmaterials und der Formteile, das Dichtmaterial sich stärker ausdehnt als die Formteile, so daß die Dichtwirkung zumindest beibehalten, wenn nicht sogar vergrößert wird.

Weitere vorteilhafte Ausgestaltungen der Erfindung ergeben sich aus den übrigen in den abhängigen Ansprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: einen Längsschnitt durch eine Dichtungsanordnung eines Gassensors nach einer ersten Ausführungsvariante;
- Figur 2: einen Längsschnitt durch eine Dichtungsanordnung eines Gassensors nach einer zweiten Ausführungsvariante und
- Figur 3: einen Teil-Längsschnitt durch eine Dichtungsanordnung eines Gassensors nach einer dritten Ausführungsvariante.

### Beschreibung der Ausführungsbeispiele

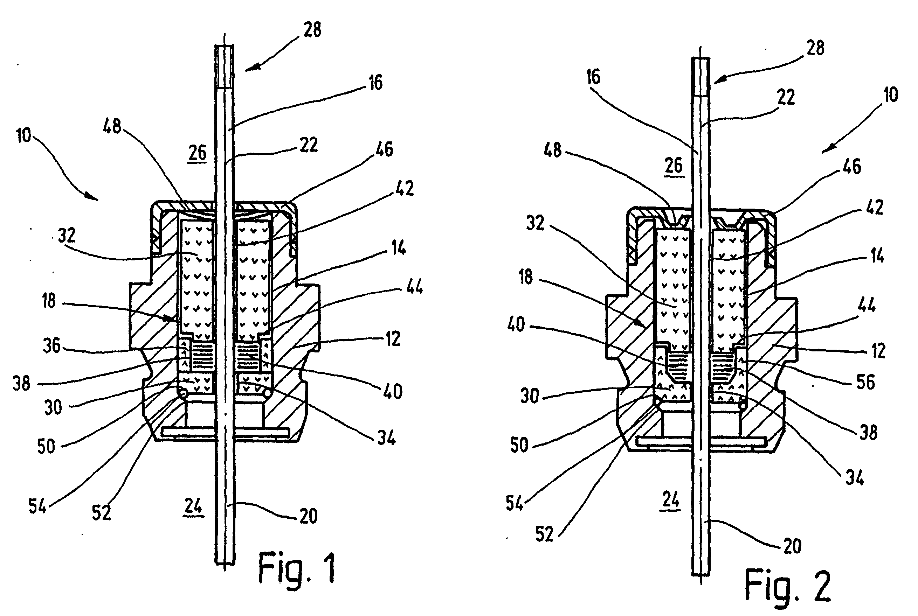

In den Figuren 1 bis 3 ist jeweils ausschnittsweise ein Gassensor 10 mit seinen für die vorliegende Erfindung wesentlichen Bestandteilen gezeigt. Gleiche Teile in den Figuren sind trotz ihres teilweise unterschiedlichen Aufbaus zur besseren Verdeutlichung mit gleichen Bezugszeichen versehen.

In der Figur 1 ist ein Gassensor 10 gezeigt. Der Gassensor 10 besitzt ein Gehäuse 12, durch dessen Längsbohrung 14 ein planares Sensorelement 16 geführt ist. Das Sensorelement 16 ist in dem Gehäuse 12 durch eine Dichtungsanordnung 18 fixiert. Das Sensorelement 16 besitzt einen meßgasseitigen Abschnitt 20 und einen referenzgasseitigen Abschnitt 22. Der meßgasseitige Abschnitt 20 ragt in einen Meßgasraum 24, während der referenzgasseitige Abschnitt 22 in einen Referenzgasraum 26 ragt. Der Abschnitt 22 besitzt hier nicht näher dargestellte Kontakte 28 zum elektrischen Kontaktieren des Sensorelementes 16. Mittels der Dichtungsanordnung 18 wird der Meßgasraum 24 von dem Referenzgasraum 26 abgedichtet, wobei das Gehäuse 12 beispielsweise in dem Abgasrohr eines Kraftfahrzeuges befestigt ist.

Die Dichtungsanordnung 18 besitzt ein meßgasseitiges Formteil 30 sowie ein referenzgasseitiges Formteil 32. Das Formteil 30 ist im wesentlichen scheibenförmig ausgebildet und besitzt eine Durchgangsöffnung 34 für das Sensorelement 16. Auf dem Formteil 30 stützt sich ein Ring 36 ab, dessen Außenumfang an der Innenwandung des Gehäuses 12 anliegt und der einen Innenraum 38 ausbildet. Der Innenraum 38 ist mit einem Dichtmaterial 40 ausgefüllt. Das zweite Formteil 32 ist im wesentlichen zylinderförmig ausgebildet und besitzt ebenfalls eine Durchgangsöffnung 42 für das Sensorelement 16. An seiner dem Ring 36 zugewandten Stirnseite besitzt das Formteil 32 eine ringförmige Stufenausnehmung 44. Die Stufenausnehmung 44 und der Ring 36 sind so dimensioniert, daß diese paßgenau über eine wählbare Länge ineinander verschiebbar sind.

Das Gehäuse 12 ist mittels eines Deckels 46 verschließbar, indem dieser beispielsweise auf das Gehäuse 12 aufrastbar, aufschraubbar oder auf andere geeignete Weise arretierbar ist oder geschweißt wird. Der Deckel 12 besitzt an seiner der Dichtungsanordnung 18 zugewandten Seite wenigstens ein Federelement 48, beispielsweise eine angeformte Tellerfeder.

Das Formteil 30 weist an seiner dem Meßgasraum 24 zugewandten Seite eine konische Ringschulter 50 auf, die mit einer entsprechenden Ringstufe 52 des Gehäuses 12 korrespondiert. In die Ringstufe 52 ist ein Dichtring 54 eingelegt.

Das Dichtmaterial 40 besteht beispielsweise aus einem leicht plastisch verformbaren Material, beispielsweise einem Metall oder Keramikpulver (Steatit, Bornitrid). Die Formteile 30 und 32 sowie der Ring 36 bestehen aus einem hochfesten, elektrisch isolierenden Material, so daß das Sensorelement 16 gegenüber dem Gehäuse 12 elektrisch isoliert fixiert ist. Die Formteile 30 und 32 sowie der Ring 36 können aus einer hochfesten Keramik, beispielsweise Aluminiumoxid Al₂O₃ oder Siliziumnitrid Si₃N₄ bestehen. Das Material der Formteile 30 und 32 sowie des Ringes 36 ist auf das Dichtmaterial 40 derart abgestimmt, daß ein thermischer Ausdehnungskoeffizient des Dichtmaterials 40 größer oder gleich dem thermischen Ausdehnungskoeffizienten der Formteile 30, 32 und 36 ist. Ferner erfolgt die Materialauswahl so, daß ein thermischer Ausdehnungskoeffizient des Sensorelementes 16, das typischerweise aus Zirkoniumoxid ZrO₂ besteht, größer ist als der thermische Ausdehnungskoeffizient des Dichtmaterials 40. Als Dichtmaterial 40 kann beispielsweise ein pulverförmiges Bornitrid verwendet werden.

Bei der Montage des Sensorelementes 10 wird der Deckel 46 auf das Gehäuse 12 aufgesetzt, so daß über das Federelement 48 eine Druckkraft auf das Formteil 32 ausgeübt wird. Dieses wird in den Ring 36 entlang der Stufenausnehmung 44 verschoben und verdichtet hierdurch das Dichtmaterial 40. Die hierbei auftretende Druckkraft ist ausreichend, um das Dichtmaterial 40 plastisch zu verformen. Hierdurch wird neben der Verdichtung eine optimale Anpassung des Dichtmaterials 40 an die Konturen des Sensorelementes 16 sowie des Formteils 30 beziehungsweise 32 und des Ringes 36 erreicht. Somit können etwa vorhandene geringfügige Fertigungstoleranzen und/oder fertigungsbedingte Grate ausgeglichen werden. Nach Erreichen der Endstellung des Deckels 46 werden die Fügekräfte über das Federelement 48 aufrechterhalten, so daß auch bei einem bestimmungsgemäßen Gebrauch des Gassensors 10 das Dichtmaterial 40 permanent mit einer Preßkraft beaufschlagt ist. Somit können Erschütterungen oder ähnliches nicht zu einer nachlassenden Dichtwirkung der Dichtungsanordnung 18 führen. Aufgrund der Härte des Materials des Sensorelementes 16 führt das Einbringen der Preßkräfte in das Dichtmaterial 40 zu einem sehr guten Anschmiegen des Dichtmaterials 40 an das Sensorelement 16. Somit wird jegliche Verbindung zwischen dem Meßgasraum 24 und dem Referenzgasraum 26 verhindert. Undichtigkeiten aufgrund eventuell vorhandener Restporösität können durch die plastische Verformung des Dichtmaterials 40 nicht bestehen.

Durch die Wahl der thermischen Ausdehnungskoeffizienten der Materialien des Sensorelementes 16, des Dichtmaterials 40 sowie der Formteile 30, 32 und 36 wird erreicht, daß bei einer betriebsbedingten Erwärmung des Gassensors 10 die Formteile 30, 32 und 36 eine geringere Ausdehnung als das Dichtmaterial 40 erfahren und dieses wiederum eine geringere Ausdehnung als das Sensorelement 16 erfährt. Hierdurch werden auftretende Undichtigkeiten infolge einer unterschiedlichen Ausdehnung der einzelnen Materialien entgegengewirkt, im Gegenteil, durch die Wahl der thermischen Ausdehnungskoeffizienten wird die Dichtwirkung bei einer Erwärmung verstärkt.

In Figur 2 ist der Gassensor 10 in einer zweiten Ausführungsvariante gezeigt. Im Unterschied zur Figur 1 ist hier das Formteil 30 und der Ring 36 einstückig ausgebildet. Das Formteil 30 besitzt einen hochgezogenen Rand 56, so daß sich ein wannenförmiger Innenraum 38 zur Aufnahme des Dichtmaterials 40 ergibt. Der Rand 56 des Formteils 30 bildet mit der Stufenausnehmung 44 des Formteils 32 einen Paßsitz.

Der Deckel 46 gemäß dem Ausführungsbeispiel in Figur 2 besitzt eine Formgebung, die gleichzeitig die Ausbildung des Federelementes 48 sicherstellt. Der Deckel 48 besitzt hierzu eine genügend große Elastizität, so daß bei Aufsetzen auf das Gehäuse 12 über die Federelemente 48 eine Preßkraft auf das Formteil 32 und somit auf das Dichtmaterial 40 erfolgt.

Eine zusätzliche Abdichtung zwischen dem Formteil 30 und dem Gehäuse 12 erfolgt über den Dichtring 54.

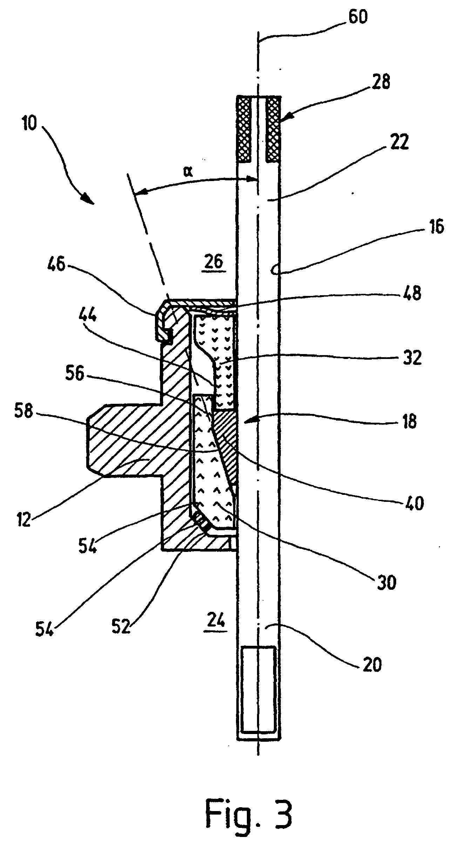

Bei dem in Figur 3 gezeigten Ausführungsbeispiel besitzt das Formteil 30 eine konische Auflauffläche 58 für das Dichtmaterial 40. Die Auflauffläche 58 verläuft hierbei in einem Winkel α zu einer gedachten Längsachse 60 des Sensorelementes 16. Hierdurch wird erreicht, daß beim Aufsetzen des Deckels 46 über das Federelement 48 und das Formteil 32 besonders hohe Preßkräfte auf das Dichtmaterial 40 wirken, die zu einer großen Verdichtung beziehungsweise plastischen Verformung des Dichtmaterials 40 führen. Hierbei wird das Dichtmaterial 40 in den sich verringernden Spalt zwischen der Auflauffläche 58 des Formteils 30 und des Sensorelementes 16 verpreßt, so daß sich eine optimale Dichtwirkung ergibt. Über eine Wahl des Winkels α kann die auf das Dichtmaterial 40 einwirkende Preßkraft eingestellt werden. Bei Wahl eines geeigneten kleinen Winkels α wird das Lösen der Dichtmaterialien 40 durch eine Selbsthemmung vermieden. Die über das Federelement 48 auf die Dichtungsanordnung 18 angreifende Kraft dient dann lediglich noch dem Ausgleich von während des bestimmungsgemäßen Einsatzes des Gassensors 10 auftretenden Setzvorgängen.

Anhand der in den Figuren 1 bis 3 erläuterten Ausführungsbeispiele wird deutlich, daß durch eine Variation der Dichtungsanordnung 18, insbesondere eine Formgebung der Formteile 30, 32 beziehungsweise 36 und eine geeignete Materialwahl der Formteile und des Dichtmaterials 40, eine verbesserte Dichtwirkung gegenüber bekannten Gassensoren 10 erreicht wird. Der grundsätzliche Aufbau der Gassensoren 10 kann hierbei beibehalten werden, da lediglich ein entsprechender Austausch der Formteile 30, 32 beziehungsweise 36 zu erfolgen braucht.

## Patentansprüche

1. Gassensor, insbesondere für Abgase von Brennkraftmaschinen, mit einem planaren Sensorelement (16), welches in einer Längsbohrung (14) eines Gehäuses (12) von einer Dichtungsanordnung (18) fixiert ist, die ein erstes (30) und ein zweites Formteil (32) und ein zwischen den Formteilen angeordnetes, das Sensorelement umschließendes Dichtmateria (40) aufweist, wobei die Formteile mittels eines Federelementes zusammenpreßbar sind, und wobei wenigstens eines der Formteile eine Aufnahme für das Dichtmaterial ausbildet, **dadurch gekennzeichnet, daß** das Dichtmaterial (40) in der Aufnahme des ersten Formteils (30) von dem zweiten Formteil (32) mittels des Federelementes (48) verdichtet und/oder plastisch verformt wird und das Dichtmaterial (40) in der verdichteten und/oder plastisch verformten Stellung gehalten wird, daß das erste Formteil einen Innenraum (38) ausbildet, der das Dichtmaterial aufnimmt, und daß das zweite Formteil (32) zumindest teilweise in den Innenraum (38) drückbar ist.

2. Gassensor nach Anspruch 1, **dadurch gekennzeichnet, daß** das Dichtmaterial ein plastisch verformbares Material, insbesondere ein Keramikpulver und/oder ein Metall ist. (32) zumindest teilweise in den Innenraum (38) drückbar ist.

3. Gassensor nach einem der vorhergehenden Ansprüche, **dadurch gekennzeichnet, daß** dem Formteil (30) ein Ring (36) zugeordnet ist, der zur Ausbildung des Innenraumes (38) führt.

4. Gassensor nach Anspruch 2, **dadurch gekennzeichnet, daß** das Formteil (30) einen Rand (58) aufweist, der den Innenraum (38) ausbildet.

5. Gassensor nach einem der vorhergehenden Ansprüche, **dadurch gekennzeichnet, daß** der Ring (36) oder der Rand (58) an ihrer dem Sensorelement (16) zugewandten Seite eine konische Auflauffläche (58) für das Dichtmaterial (40) aufweisen.

6. Gassensor nach Anspruch 5, **dadurch gekennzeichnet, daß** die Auflauffläche (58) in einem wählbaren Winkel (α) zu einer Längsachse (60) des Sensorelementes (16) verläuft und über den Winkel (α) ein Grad der Verdichtung und/oder plastischen Verformung des Dichtmaterials (40) einstellbar ist.

7. Gassensor nach einem der vorhergehenden Ansprüche, **dadurch gekennzeichnet, daß** das Dichtmaterial (40) einen höheren thermischen Ausdehnungskoeffizienten als die Formteile (30, 32, 36) aufweist.

8. Gassensor nach einem der vorhergehenden Ansprüche, **dadurch gekennzeichnet, daß** das Sensorelement (16) einen höheren thermischen Ausdehnungskoeffizienten als das Dichtmaterial (40) aufweist.

9. Gassensor nach einem der vorhergehenden Ansprüche, **dadurch gekennzeichnet, daß** das Dichtmaterial (40) ein Metall ist.

10. Gassensor nach einem der vorhergehenden Ansprüche, **dadurch gekennzeichnet, daß** das Dichtmaterial (40) ein pulverförmiges Bornitrid ist.

11. Gassensor nach einem der vorhergehenden Ansprüche, **dadurch gekennzeichnet, daß** die Formteile (30, 32, 36) aus einer hochfesten Keramik, insbesondere aus Aluminiumoxid oder Siliziumnitrid, bestehen.

12. Gassensor nach einem der vorhergehenden Ansprüche, **dadurch gekennzeichnet, daß** das Federelement (48) von einem auf das Gehäuse (12) arretierbaren Deckel (46) ausgebildet wird.

## Claims

1. Gas sensor, in particular for exhaust gases from internal combustion engines, having a planar sensor element (16), which is fixed in a longitudinal bore (14) in a housing (12) by a sealing arrangement (18) which has a first shaped part (30) and a second shaped part (32) and a sealing material (40) arranged between the shaped parts and surrounding the sensor element, it being possible for the shaped parts to be pressed together by means of a spring element, and at least one of the shaped parts forming a receptacle for the sealing material, **characterized in that** the sealing material (40) in the receptacle of the first shaped part (30) is compressed and/or plastically deformed by the second shaped part (32) by means of the spring element (48), and the sealing material (40) is held in the compressed and/or plastically deformed position, **in that** the first shaped part forms an interior space (38) which receives the sealing material, and **in that** the second shaped part (32) can be pressed at least partially into the interior space (38).

2. Gas sensor according to Claim 1, **characterized in that** the sealing material is a plastically deformable material, in particular a ceramic powder and/or a metal.

3. Gas sensor according to one of the preceding claims, **characterized in that** the shaped part (30) is assigned a ring (36) which leads to the formation of the interior space (38).

4. Gas sensor according to Claim 2, **characterized in that** the shaped part (30) has a rim (58) which forms the interior space (38).

5. Gas sensor according to one of the preceding claims, **characterized in that** the ring (36) or the rim (58), on its side which faces the sensor element (16), has a conical run-up surface (58) for the sealing material (40).

6. Gas sensor according to Claim 5, **characterized in that** the run-up surface (58) runs at a selectable angle (α) with respect to a longitudinal axis (60) of the sensor element (16) and a degree of compression and/or plastic deformation of the sealing material (40) can be set using the angle (α).

7. Gas sensor according to one of the preceding claims, **characterized in that** the sealing material (40) has a higher coefficient of thermal expansion than the shaped parts (30, 32, 36).

8. Gas sensor according to one of the preceding claims, **characterized in that** the sensor element (16) has a higher coefficient of thermal expansion than the sealing material (40).

9. Gas sensor according to one of the preceding claims, **characterized in that** the sealing material (40) is a metal.

10. Gas sensor according to one of the preceding claims, **characterized in that** the sealing material (40) is a pulverulent boron nitride.

11. Gas sensor according to one of the preceding claims, **characterized in that** the shaped parts (30, 32, 36) consist of a high-strength ceramic, in particular of aluminium oxide or silicon nitride.

12. Gas sensor according to one of the preceding claims, **characterized in that** the spring element (48) is formed by a cover (46) which can be locked onto the housing (12).

## Revendications

1. Dispositif d'étanchéité pour détecteur de gaz, en particulier de gaz d'échappement de moteurs à combustion interne, dans lequel un élément détecteur plan (16) monté dans un alésage longitudinal (14) d'un boîtier (12) est fixé par un élément d'étanchéité (18) qui comprend une première (30) et une seconde partie moulée (32) avec entre elles un matériau d'étanchéité (40) entourant l'élément détecteur, ces parties moulées pouvant être pressées l'une contre l'autre par un élément élastique et l'une d'elles au moins présentant un logement pour le matériau d'étanchéité,
**caractérisé en ce que**
le matériau d'étanchéité (40) est comprimé et/ou déformé plastiquement dans le logement de la première partie moulée (30) par la seconde partie moulée (32) sous l'action de l'élément élastique (48) et il est maintenu en position comprimée et/ou déformée plastiquement, la première partie moulée présentant une chambre interne (38) qui reçoit le matériau d'étanchéité, et la seconde partie moulée (32) peut, au moins en partie, être enfoncée sous pression dans la chambre (38).

2. Détecteur de gaz selon la revendication 1,
**caractérisé en ce que**
le matériau d'étanchéité est un matériau déformable plastiquement, en particulier une poudre céramique et/ou un métal.

3. Détecteur de gaz selon l'une quelconque des revendications 1 ou 2,
**caractérisé en ce qu'**
à la partie moulée (30) est associée une bague (36) servant à former la chambre interne (38).

4. Détecteur de gaz selon la revendication 2,
**caractérisé en ce que**
la partie moulée (30) présente un bord (58) qui forme la chambre interne (38).

5. Détecteur de gaz selon l'une quelconque des revendications précédentes,
**caractérisé en ce que**
la bague (36) ou le bord (58) présente, sur sa face en regard de l'élément détecteur (16) une portée inclinée en cône (58) pour le matériau d'étanchéité (40).

6. Détecteur de gaz selon la revendication 5,
**caractérisé en ce que**
la portée inclinée (58) fait avec l'axe longitudinal (60) de l'élément détecteur (16) un angle (α) que l'on peut choisir et qui permet de régler l'importance de la compression et/ou de la déformation plastique du matériau d'étanchéité (40).

7. Détecteur de gaz selon l'une quelconque des revendications précédentes,
**caractérisé en ce que**
le matériau d'étanchéité (40) a un coefficient de dilatation thermique supérieur à celui des parties moulées (30, 32, 36).

8. Détecteur de gaz selon l'une quelconque des revendications précédentes,
**caractérisé en ce que**
l'élément détecteur (16) a un coefficient de dilatation thermique supérieur à celui du matériau d'étanchéité (40).

9. Détecteur de gaz selon l'une quelconque des revendications précédentes,
**caractérisé en ce que**
le matériau d'étanchéité (40) est un métal.

10. Détecteur de gaz selon l'une quelconque des revendications précédentes,
**caractérisé en ce que**
le matériau d'étanchéité (40) est un nitrure de bore en poudre.

11. Détecteur de gaz selon l'une quelconque des revendications précédentes,
**caractérisé en ce que**
les parties moulées (30, 32, 36) sont en céramique hautement résistante, en particulier en oxyde d'aluminium ou en nitrure de silicium.

12. Détecteur de gaz selon l'une quelconque des revendications précédentes,
**caractérisé en ce que**
l'élément élastique (48) est constitué par un couvercle (46) qui peut être bloqué sur le boîtier (12).
